# FASCICULE DE BREVET EUROPEEN

(11) **EP 1 323 126 B1**
(45) Date de publication et mention de la délivrance du brevet: **04.04.2007**
(21) Numéro de dépôt: 01972142.2
(22) Date de dépôt: 11.09.2001
(51) Int. Cl.: G06K 19/067

(54) **SYSTEME COMPRENANT UNE ETIQUETTE ELECTRONIQUE SANS CONTACT, UN COMBINE TELEPHONIQUE ET UNE CARTE A PUCE**
SYSTEM UMFASSEND EIN KONTAKTLOSES ELEKTRONISCHES ETIKETT, EIN TELEFON-HANDTEIL UND EINE CHIPKARTE
SYSTEM COMPRISING A CONTACT-FREE ELECTRONIC LABEL, A TELEPHONE HANDPIECE AND A CHIP CARD

(30) Priorité: 21.09.2000 FR 0012039
(43) Date de publication de la demande: 02.07.2003
(73) Titulaire: GEMPLUS, 13881 Gémenos Cedex (FR)
(72) Inventeur: TUILIER, Edmond, F-13012 Marseille (FR)
(86) Numéro de dépôt international: PCT/FR2001/002812
(87) Numéro de publication internationale: WO 2002/025580

(56) Documents cités:
- EP-A- 0 827 100
- FR-A- 2 776 407
- US-A- 6 008 727
- PEYRUCAT J -F: "ETIQUETTES ELECTRONIQUES: QUAND LES PRODUITS SE FICHENT D'EUX MEMES" MESURES REGULATION AUTOMATISME,FR,CFE. PARIS, no. 602, 27 février 1989 (1989-02-27), pages 37-42, XP000050718 ISSN: 0755-219X

## Description

L'invention concerne les étiquettes électroniques qui sont utilisées pour identifier les objets auxquels elles sont associées.

Il est connu d'utiliser des codes barre pour identifier des objets, tels que des articles d'épicerie, en les imprimant directement sur l'emballage ou par l'intermédiaire d'étiquettes qui sont ensuite collées sur l'emballage. Ces codes barre sont par exemple lus par un dispositif de lecture optique à la caisse du magasin de vente et le code barre lu sert, par l'intermédiaire d'un système informatique, à afficher son prix sur un écran et à l'additionner aux prix des autres articles précédemment passés à la caisse.

Ces codes barre présentent l'inconvénient majeur d'être figés, c'est-à-dire qu'ils ne peuvent être mis à jour au cours de la vie de l'objet sauf à créer un nouveau code barre qui remplace l'ancien, ce nouveau code barre reprenant tout ou partie de l'ancien code barre mais en y ajoutant d'autres informations qui sont nécessaires ou simplement utiles pour la suite des opérations de distribution.

Il en résulte que plusieurs codes barre sont apposés sur chaque article au cours de la chaîne de distribution, ce qui occasionne de nombreuses manipulations et est donc source d'erreurs. Il est donc difficile et coûteux d'effectuer un suivi de l'article au cours de sa vie à l'aide de codes barre différents d'une étape à l'autre de la distribution.

Ce problème est particulièrement aigu dans la distribution de téléphones mobiles où chaque combiné peut être associé à une carte à puce électronique, appelée carte SIM, qui contient tous les éléments permettant l'utilisation du combiné par un nouvel abonné selon certains droits d'usage définis dans l'abonnement. Il est rappelé que "SIM" est l'acronyme de l'expression anglo-saxonne "Subscriber Identification Mobile".

En effet, les cartes SIM et les combinés sont fabriqués et distribués séparément les uns des autres, et sont répertoriés par différents codes ou numéros.

Ainsi, la carte SIM est identifiée dans un fichier EF-ICC enregistré dans la mémoire de la carte, "EF-ICC" étant l'acronyme pour l'expression anglo-saxonne :
"Entry File-Integrated Circuit Chip", qui contient les informations suivantes :
   - le numéro de série du fabricant,
   - le numéro de série de la carte pour l'opérateur téléphonique, indiquant sa description, sa série et son numéro dans la série,
   - le numéro international de l'abonné, connu sous l'acronyme IMSI pour l'expression anglo-saxonne "International Mobile Subscriber Identity",
   - des clés d'authentification, connues sous l'acronyme KI pour l'expression anglo-saxonne "Key Information", sont associées à ce numéro IMSI,
   - enfin, pour chaque opérateur de téléphonie mobile, les numéros IMSI sont regroupés sur des bases de données connues sous l'acronyme "HLR" pour l'expression anglo-saxonne "Home Location Register", chacune étant identifiée par un numéro.

Par ailleurs, chaque combiné contient un numéro de série d'identification plus connu sous l'acronyme "IMEI" pour l'expression anglo-saxonne : "International Mobile Equipment Identity".

Lorsqu'une carte SIM est vendue avec un combiné à un abonné, un numéro d'appel est attribué à ce dernier et est connu sous l'acronyme "MS-ISDN" pour l'expression anglo-saxonne "Mobile Station-Integrated Services Digital Number".

L'opérateur téléphonique, qui reçoit les cartes SIM et les combinés, les distribue par l'intermédiaire de différentes chaînes de distribution qui comprennent chacune un distributeur, des grossistes et des vendeurs aux clients finaux. A chaque étape de la distribution, il est nécessaire de répertorier et décompter les cartes SIM et les combinés en y ajoutant d'autres informations relatives aux interventions effectuées, notamment l'identité de l'intervenant. D'où le remplacement des codes barre par d'autres à chaque étape avec un résultat médiocre quant au suivi des articles, distribués, cartes SIM et combinés téléphoniques.

De plus, les codes barre doivent être visibles de l'extérieur de l'emballage, ce qui ne permet pas d'utiliser directement le code barre associé à la carte, SIM, laquelle est à l'intérieur de l'emballage, sauf à y pratiquer une fenêtre de lecture.

Il y a donc, au moins dans ce domaine de la distribution des téléphones mobiles, un grand besoin de simplification des opérations de suivi des produits afin d'en réduire le coût et le nombre d'erreurs tout en améliorant leur traçabilité.

Le document PEYRUCAT J-F: "Etiquettes électroniques: Quand les produits se fichent d'eux-mêmes" Mesures Régulation Automatisme. FR, CFE. Paris, n° 602,27 février 1989 pages 37-42 décrit une étiquette électronique pour la gestion d'outils notamment la localisation et le suivi de la fabrication d'outils mécaniques ou de cartes électroniques. L'étiquette comprend des informations mémorisées dans des moyens d'enregistrement qui identifient l'outil ou les tâches de fabrication restant à accomplir sur auquel elle est associée.

Il est connu du brevet américain référencé US 5 231 273 un système d'inventaire et plus particulièrement le système du « code barre », ainsi que le mode d'inventaire manuel en tant qu'arts antérieurs connus. Le document US 5 231 273 présente les nombreux risques d'erreurs liés à ces méthodes ainsi que les délais importants pour réaliser de telles opérations et il décrit également un système permettant de réaliser des inventaires à l'aide de transpondeurs et d' équipements électroniques.

Un but de la présente invention est de permettre de suivre les différentes étapes de la distribution d'une carte à puce SIM et/ou d'un combiné téléphonique pour téléphone mobile de manière simple, économique et sans erreur.

Ce but est atteint en associant une étiquette électronique sans contact à la carte à puce SIM et/ou au combiné téléphonique et dans laquelle sont enregistrées respectivement tout ou partie des informations identifiant la carte SIM et/ou le combiné téléphonique ainsi que des informations relatives aux différentes étapes de la chaîne de distribution du téléphone mobile.

L'invention concerne donc un système conforme aux revendications 1 à 15.

L'invention sera mieux comprise à la lecture de la description suivante d'un exemple particulier de réalisation, ladite description étant faîte en relation avec les dessins joints dans lesquels :
- la figure 1 est un schéma fonctionnel d'une étiquette électronique sans contact associé à un dispositif d'interrogation/lecture/écriture,
- la figure 2 est une vue montrant une étiquette électronique sans contact,
- la figure 3 est une vue montrant une étiquette électronique associée à un support de carte à puce SIM,
- la figure 4 est une vue d'un paquet contenant une carte à puce SIM et un combiné téléphonique qui sont prévus pour la vente à l'abonné, et
- la figure 5 est une vue montrant un combiné téléphonique dans lequel la carte à puce SIM est introduite pour matérialiser l'abonnement à un réseau de téléphonie mobile.

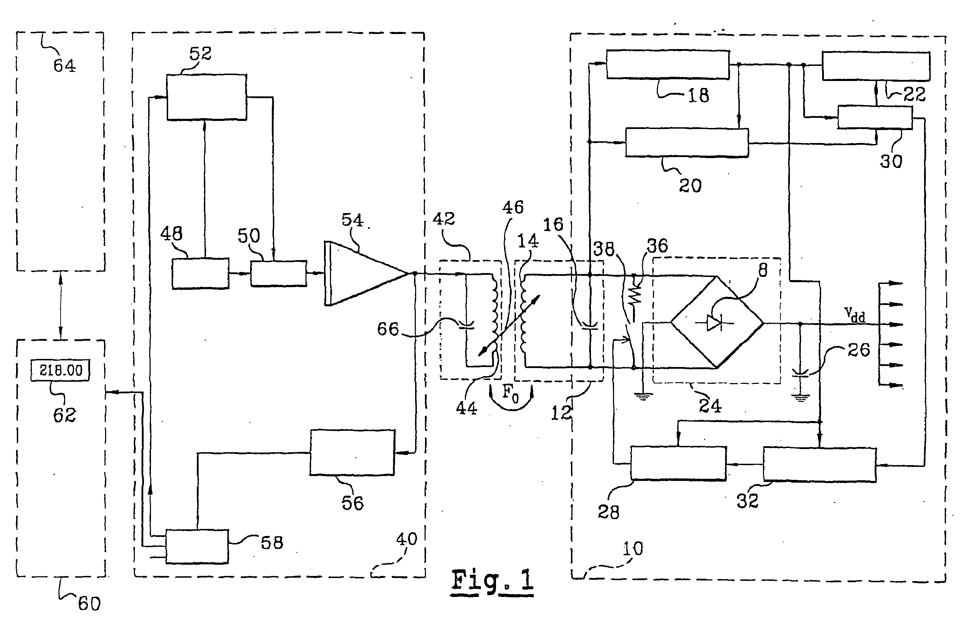

Une étiquette électronique sans contact 10 comprend, par exemple (figure 1), une antenne 12 constituée d'un circuit accordé qui comprend un enroulement d'induction 14 et un condensateur 16. La fréquence d'accord F₀ de l'antenne 12 est par exemple de 13,56 Mégahertz.

Ce circuit accordé de l'antenne est connectée à différents circuits qui réalisent chacun une fonction particulière. Ainsi, un circuit 24 réalise la fonction de redressement double alternance du signal de fréquence Fₒ aux bornes du circuit accordé, par exemple, par un pont à diodes 8. Ce circuit de redressement 24 est suivi d'un condensateur de filtrage 26 du signal redressé qui fournit la tension d'alimentation V_{dd} de tous les autres circuits de l'étiquette électronique, notamment ceux représentés sur la figure 1.

Un circuit 18 réalise la fonction dite Horloge et la synchronisation de cette dernière à partir de la fréquence F₀. Les signaux à différentes fréquences fournis par ce circuit Horloge 18 sont appliqués aux autres circuits de l'étiquette sauf à l'antenne 12 et au circuit de redressement 24.

Le circuit 20 réalise la fonction de démodulation et de décodage des signaux basse fréquence qui modulent le signal à la fréquence porteuse F₀, signaux qui constituent l'information reçue par l'étiquette.

Les informations relatives au produit auquel l'étiquette est associée sont enregistrées dans une mémoire 22 qui est adressable par un circuit d'enregistrement/lecture 30.

Ce circuit d'enregistrement/lecture 30 est sous le contrôle des signaux détectés et décodés par le circuit 20 et fournit des signaux qui sont appliqués à un circuit de synthèse des messages 32.

Les messages fournis par le circuit de synthèse 32 sont appliqués à un circuit de modulation de charge d'antenne qui a été représenté schématiquement par un circuit 28 et par un interrupteur 38 commandé par le circuit 28. Une résistance de charge 36 a été représentée en série avec l'interrupteur 38.

Le dispositif d'interrogation/lecture/écriture 40 de l'étiquette 10 comprend par exemple de manière connue une antenne 42 constituée d'un circuit accordé qui comprend un enroulement d'induction 44 et un condensateur 66, la fréquence d'accord étant F₀. Les deux antennes 12 et 42 sont couplées magnétiquement comme cela est représenté par la flèche 46.

L'antenne 42 est alimentée par des signaux électriques à la fréquence porteuse F₀ qui sont modulés par des signaux numériques basse fréquence véhiculant l'information à transmettre à l'étiquette 10. Ces signaux électriques modulés sont élaborés par un modulateur 50 qui reçoit, d'une part, un signal à la fréquence F₀ d'un oscillateur 48 et les signaux de modulation d'un générateur de messages 52. Les signaux de sortie du modulateur 50 sont appliqués à un amplificateur de puissance 54 dont la borne de sortie est directement connectée à l'antenne 42.

Les signaux reçus par l'antenne 42 sont appliqués à un circuit de réception 56 qui réalise leur détection, démodulation et décodage. Les signaux décodés sont appliqués à un microprocesseur 58 qui les interprète et fournit les signaux de commande du générateur de message 52.

Dans le cas où les signaux décodés correspondent à un code identifiant le type de produit, ce code d'identification est transmis à un dispositif de comptabilisation 60 ou interface identique à ceux utilisés dans les systèmes à codes à "barres" et qui est connecté à un dispositif informatique 64 fournissant les prix des articles. Cette interface 60 affiche sur un écran 62 le prix de chaque produit qui est passé devant le dispositif d'interrogation/lecture/écriture et additionne les prix correspondant aux différents produits. Le prix total des produits s'affiche sur l'écran 62 au fur et à mesure du passage des produits devant le dispositif d'interrogation/lecture/écriture.

L'interface 60 transmet des messages et/ou fournit des signaux électriques au dispositif d'interrogation/lecture/écriture 40 et plus particulièrement au microprocesseur 58, pour lui indiquer, notamment, que le prix du produit a été comptabilisé et, en conséquence, qu'il peut transmettre à l'étiquette électronique du produit un message indiquant par exemple que le produit est libre de sortir du magasin sans être suspecté d'avoir été volé.

Ce message aura pour effet, dans l'étiquette électronique, de mettre à jour dans la mémoire 22, un code dit "anti-vol" de manière à éviter le déclenchement d'une alarme lors du passage du produit dans un portillon de sortie équipé d'un dispositif d'interrogation/lecture des étiquettes électroniques qui est spécialement adapté à lire le code anti-vol.

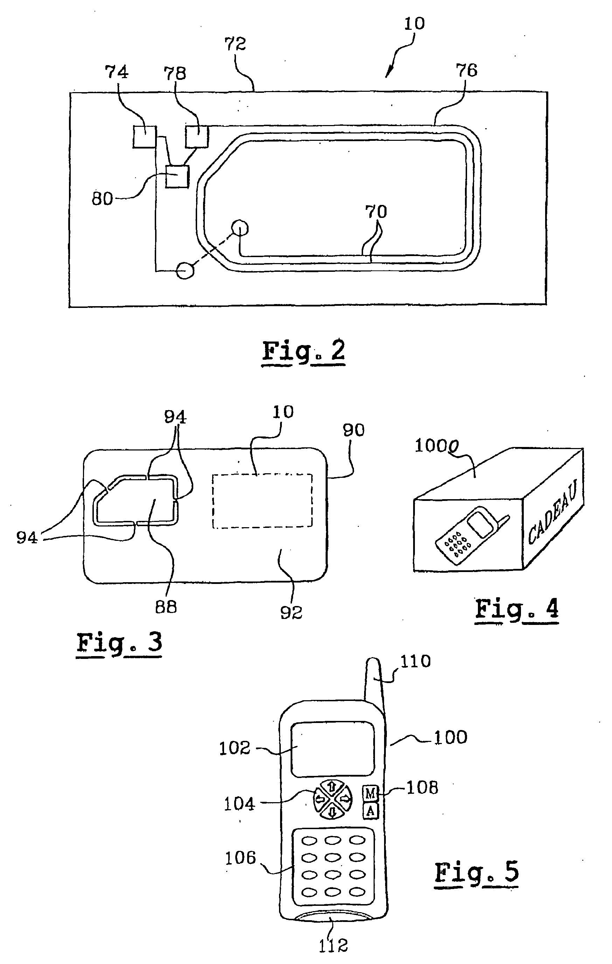

L'étiquette électronique 10 se présente sous la forme d'une feuille 72 (figure 2) en matériau isolant souple, par exemple en polypropylène, dont une face supporte un enroulement conducteur métallique 76 de quelques spires 70 qui réalise la bobine 14 (figure 1). Les extrémités de cet enroulement 76, sous forme de plots 74 et 78, sont connectées aux bornes d'entrée/sortie d'un circuit intégré électronique 80 (figure 1) qui contient, entre autres, le condensateur d'accord 16 de l'antenne 12 (figure 1).

Selon l'invention, à chaque carte à puce électronique SIM pour téléphone mobile est associée une étiquette électronique sans contact du type décrit en relation avec les figures 1 et 2. Cette association peut être réalisée de différentes manières, soit de manière directe en solidarisant l'étiquette électronique sur le support de la carte à puce SIM, soit de manière indirecte en solidarisant l'étiquette électronique sur tout conditionnement contenant la carte à puce électronique pour téléphone mobile, tel qu'un boîtier, une enveloppe, une pochette.

Dans le cas où la carte SIM 88 (figure 3) pour téléphone mobile fait elle-même partie d'une carte 90 de plus grand format, par exemple le format des cartes bancaires, et s'en détache par pression des doigts qui casse des ponts 94, l'étiquette électronique 10 peut être solidarisée sur la partie 92 de la carte 90 qui entoure celle portant la carte SIM.

Selon l'invention, au moins une partie du fichier EF-ICC de la carte SIM est enregistrée dans la mémoire 22 de l'étiquette électronique, cette partie concernant notamment:
- le numéro de série du fabricant,
- le numéro de série de la carte identifiant sa description, sa série et son numéro dans la série,
- le numéro international de l'abonné "IMSI" défini ci-dessus,
- le ou les clés d'authentification "KI" défini ci-dessus,
- le numéro identifiant la base de données "HLR" associée pour un groupe d'abonnés défini ci-dessus.

Ces informations peuvent représenter quinze à vingt octets mais, selon l'invention, la capacité de la mémoire 22 est prévue pour enregistrer d'autres informations relatives à la chaîne de distribution de la carte SIM telles que :
- un code identifiant le distributeur,
- un code identifiant le grossiste,
- un code identifiant le vendeur au client final,
- des codes identifiant des dates de transfert entre les intervenants dans la chaîne de distribution.

Au moment où la carte SIM est associée à un combiné téléphonique, le numéro de série "MS-ISDN" (défini ci-dessus) identifiant le combiné peut être enregistré dans la mémoire 22.

Ce combiné téléphonique portable 100 (figure 5) comprend un écran 102, un navigateur d'écran 104, un clavier 106 et une touche Marche/Arrêt 108. Il comprend également une antenne d'émission/réception 110 pour la liaison radio-fréquence et des bornes de connexion 112, notamment pour se connecter à un chargeur de batterie ou à un périphérique tel qu'une oreillette d'écoute.

La carte à puce SIM est introduite dans le combiné téléphonique 100 par sa face arrière de manière à la connecter aux circuits électroniques du combiné téléphonique.

Ces numéros de série et codes sont enregistrés dans la mémoire 22 de l'étiquette électronique à différentes étapes de la fabrication et de la distribution par l'intermédiaire du dispositif d'interrogation/lecture/écriture.

Ainsi, les numéros de série du fabricant de la carte et de la carte elle-même sont enregistrés à la fin de l'étape de fabrication à la fois dans le fichier EF-ICC de la carte SIM et dans la mémoire 22 de l'étiquette électronique qui lui est associée.

Les codes identifiant les intervenants de la distribution et les états des transferts entre les intervenants et toutes autres informations relatives à la distribution sont enregistrées à chaque étape de la distribution par l'intermédiaire du dispositif d'interrogation/lecture/écriture.

Le numéro de série identifiant le combiné est enregistré dans la mémoire 22 au moment où une carte SIM est associée à un combiné, notamment au moment où est créé le paquet emballage 1000 (figure 4) ou conditionnement contenant les deux éléments : la carte SIM sur son support et le combiné. Comme l'étiquette électronique sans contact 10 reste solidarisée à la carte SIM 88, cette étiquette électronique peut continuer à être interrogée, enregistrée et lue par le dispositif d'interrogation/lecture/écriture au travers de l'emballage du paquet ou conditionnement.

Au moment où la carte SIM est connectée au combiné téléphonique, l'étiquette électronique est retirée du support 90 de la carte SIM 88 et, selon ses dimensions, est solidarisée à la carte SIM ou au combiné téléphonique. Ceci permet de mémoriser toutes les informations relatives à la combinaison carte à puce SIM/combiné téléphonique sur une seule étiquette électronique.

L'invention a été décrite en associant une étiquette électronique sur le conditionnement de la carte à puce SIM pour téléphone mobile mais elle s'applique également à l'utilisation d'une étiquette électronique sans contact associée au combiné téléphonique qui contiendrait au départ les informations relatives au combiné, informations qui peuvent être contenues dans un fichier d'une mémoire du combiné téléphonique, fichier similaire au fichier EF-ICC de la carte SIM.

La mémoire de cette étiquette électronique associée au combiné peut être mise à jour au fur et à mesure de la chaîne de distribution, notamment par les informations du fichier EF-ICC lues dans la carte à puce SIM au moment de leur association.

Il est clair qu'une étiquette électronique peut être associée, d'une part au support de la carte à puce SIM ou à son conditionnement et, d'autre part, au combiné téléphonique ou son conditionnement, chaque étiquette contenant les informations qui concernent le produit associé. A la fin de la chaîne de distribution aboutissant à la vente d'un appareil complet de téléphonie mobile, les mémoires des deux étiquettes électroniques devraient contenir les mêmes informations si au moment de la vente au client final, on réalise des transferts d'informations d'une étiquette électronique à l'autre et vice-versa.

Ces différentes opérations d'enregistrement sont effectuées grâce au dispositif d'interrogation/lecture/écriture décrit en relation avec la figure 1.

Le numéro d'appel attribué à l'abonné acheteur pourrait aussi être enregistré dans la mémoire 22 dans le cas où il serait souhaitable de mémoriser dans l'étiquette électronique toutes les informations de la chaîne et de garder cette étiquette pendant un certain temps.

Dans la description qui vient d'être faite de l'invention, il est important de remarquer que l'étiquette électronique qui est associée à la carte à puce SIM et/ou au combiné téléphonique comprend une mémoire dans laquelle sont enregistrées au cours du temps non seulement les informations relatives au produit associé mais aussi les informations relatives à la distribution du produit.

Les informations relatives au produit associé sont, par ailleurs, contenues dans un fichier d'une mémoire du produit lui-même et il donc facile de les transférer dans la mémoire de l'étiquette électronique. Ces informations relatives au produit associé peuvent aussi être enregistrées simultanément dans la mémoire du produit et dans la mémoire de l'étiquette électronique à la fin de la fabrication.

## Revendications

1. Système comprenant au moins une étiquette électronique sans contact (10), un combiné téléphonique (100) et une carte à puce (88), la carte à puce étant destinée à être connectée électriquement audit combiné téléphonique pour constituer un appareil de téléphonie mobile, ladite étiquette électronique (10) étant associée à au moins l'un des deux éléments composant l'appareil de téléphonie mobile, c'est à dire le combiné (100) et la carte à puce (88), ladite étiquette électronique comprenant des moyens (22, 30) ayant enregistré au moins des informations identifiant au moins l'un desdits deux éléments auquel ladite étiquette électronique est associée, lesdites informations correspondent en tout ou partie à celles mémorisées dans au moins un desdits deux éléments auquel ladite étiquette électronique (10) est associée.

2. Système selon la revendication 1, **caractérisé en ce que** ladite étiquette électronique comporte des moyens (22, 30) pour enregistrer et lire des informations relatives aux différentes étapes de distribution de l'élément auquel elle est associée.

3. Système selon la revendication 2, **caractérisé en ce que** les informations de ladite étiquette électronique relatives aux différentes étapes de distribution comprennent en outre le numéro d'appel de l'abonné connu sous l'acronyme « MS_ISDN » pour l'expression anglo-saxonne « Mobile Station - Integrated Services Digital Number ».

4. Système selon l'une quelconque des revendications 1 à 3, **caractérisé en ce que** ladite étiquette électronique, lorsqu'elle est associée à la carte à puce (88), comporte des informations identifiant la carte à puce (88), lesdites informations comprenant au moins le numéro de série du fabricant de ladite carte à puce.

5. Système selon l'une quelconque des revendications 1 à 4, **caractérisé en ce que** ladite étiquette électronique, lorsqu'elle est associée à la carte à puce (88), comporte des informations identifiant la carte à puce (88), lesdites informations comprenant au moins le numéro de série de la carte à puce.

6. Système selon, l'une quelconque dec revendications 1 à 5, **caractérisé en ce que** ladite étiquette électronique, lorsqu'elle est associée à la carte à puce (88), comporte un numéro international de l'abonné connu sous l'acronyme « IMSI » pour l'expression anglo-saxonne « International Mobile Subscriber Identity ».

7. Système selon la revendication 6, **caractérisé en ce que** ladite étiquette électronique, lorsqu'elle est associée à la carte à puce (88), comporte un numéro « HLR » identifiant une base de données sur laquelle est répertorié le numéro « IMSI » de l'abonné, « HLR » correspondant à l'acronyme de l'expression anglo-saxonne « Home Location Register ».

8. Système selon l'une quelconque des revendications 1 à 7, **caractérisé en ce que** ladite étiquette électronique, lorsqu'elle est associée à la carte à puce (88), comporte les informations identifiant la carte à puce, ces informations correspondant en tout ou partie à celles contenues dans un fichier d'une mémoire de ladite carte à puce (88).

9. Système selon la revendication 8, **caractérisé en ce que** ledit fichier d'une mémoire de ladite carte à puce (88) est le fichier connu sous l'acronyme « EF-ICC » pour l'expression anglo-saxonne « Entry File - Integrated Circuit Chip ».

10. Système selon l'une quelconque des revendications 1 à 3, **caractérisé en ce que** ladite étiquette électronique, lorsqu'elle est associée au combiné téléphonique (100), comporte des informations identifiant ledit combiné téléphonique (100), lesquelles informations comprennent, au moins, le numéro de série identifiant ledit combiné.

11. système selon l'une quelconque des revendications 1 à 3, **caractérisé en ce que** ladite étiquette électronique, lorsqu'elle est associée au combiné téléphonique (100), comporte des informations identifiant ledit combiné téléphonique (100), lesquelles informations correspondent, en tout ou partie, à celles contenues dans un fichier d'une mémoire dudit combiné téléphonique.

12. Système selon la revendication 2, **caractérisé en ce que** les informations de ladite étiquette électronique relatives aux différentes étapes de distribution comprennent au moins des codes identifiant les différents intervenants à chaque étape de la distribution.

13. Système selon la revendication 11, **caractérisé en ce que** les informations de ladite étiquette électronique relatives aux différentes étapes de distribution comprennent en outre des codes identifiant les états des transferts entre les différents intervenants.

14. Système selon l'une quelconque des revendications 12 ou 13, **caractérisé en ce que** les informations de ladite étiquette électronique relatives aux différentes étapes de distribution de la carte à puce comprennent en outre le numéro de série du combiné téléphonique (100) avec lequel la carte à puce est associée.

15. Système selon l'une quelconque des revendications 12 ou 13, **caractérisé en ce que** les informations de ladite étiquette électronique relatives aux différentes étapes de distribution du combiné téléphonique comprennent en outre les informations identifiant la carte à puce (88) avec laquelle le combiné téléphonique (100) est associé.

## Claims

1. System comprising at least one contactless electronic label (10), a telephone handset (100) and a chip card (88), the chip card being intended for being electrically connected to said handset in order to form a mobile telephone device, said electronic label (10) being associated with at least one of the two elements that make up the mobile telephone device, which is to say the handset (100) and the chip card (88), said electronic label comprising means (22, 30) storing at least information identifying at least one of said two elements with which said electronic label is associated, said information entirely or partially matching that stored in at least one of said two elements with which said electronic label (10) is associated.

2. System according to claim 1, **characterised in that** said electronic label comprises means (22, 30) for storing and reading information relating to the various distribution steps of the element to which it is associated.

3. System according to claim 2, **characterised in that** the information of said electronic label relating to the various distribution steps also comprises the subscriber's telephone number, known as "MS_ISDN", which stands for "Mobile Station - Integrated Services Digital Number".

4. System according to any one of the claims from 1 to 3, **characterised in that** said electronic label, when it is associated with the chip card (88), comprises information identifying the chip card (88), said information comprising at least the serial number of the manufacturer of said chip card.

5. System according to any one of the claims from 1 to 4, **characterised in that** said electronic label, when it is associated with the chip card (88), comprises information identifying the chip card (88), said information comprising at least the serial number of the chip card.

6. System according to any one of the claims from 1 to 5, **characterised in that** said electronic label, when it is associated with the chip card (88), comprises an international subscriber number known as "IMSI", which stands for "International Mobile Subscriber Identity".

7. System according to claim 6, **characterised in that** said electronic label, when it is associated with the chip card (8), comprises a "HLR" number identifying a database in which the subscriber's "IMSI" number is listed, "HLR" standing for "Home Location Register".

8. System according to any one of the claims from 1 to 7, **characterised in that** said electronic label, when it is associated with the chip card (88), comprises information identifying the chip card, this information entirely or partially matching that contained in a file in a memory of said chip card (88).

9. System according to claim 8, **characterised in that** said file in a memory of said chip card (88) is the file known as "EF-ICC", which stands for "Entry File - Integrated Circuit Chip".

10. System according to any one of the claims from 1 to 3, **characterised in that** said electronic label, when it is associated with the telephone handset (100), comprises information identifying said telephone handset (100), said information comprising, at least, the serial number identifying said handset.

11. System according to any one of the claims from 1 to 3, **characterised in that** said electronic label, when it is associated with the telephone handset (100), comprises information identifying said telephone handset (100), said information entirely or partially matching that contained in a file in a memory of said telephone handset.

12. System according to claim 2, **characterised in that** the information of said electronic label relating to the various distribution steps comprises at least codes identifying the various parties involved in each distribution step.

13. System according to claim 11, **characterised in that** the information of said electronic label relating to the various distribution steps also comprises codes identifying the status of the transfers between the various parties involved.

14. System according to either one of the claims 12 or 13, **characterised in that** the information of said electronic label relating to the various distribution steps of the chip card also comprises the serial number of the telephone handset (100) with which the chip card is associated.

15. System according to either one of the claims 12 or 13, **characterised in that** the information of said electronic label relating to the various distribution steps of the telephone handset also comprises information identifying the chip card (88) with which the telephone handset (100) is associated.

## Patentansprüche

1. System bestehend aus mindestens einem kontaktlosen elektronischen Etikett (10), einem Telefonhörer (100) und einer Chipkarte (88), wobei die Chipkarte dazu bestimmt ist, elektrisch mit dem besagten Telefonhörer verbunden zu werden, um ein mobiles Telefongerät zu bilden, wobei das besagte elektronische Etikett (10) mindestens einem der beiden Bestandteile, Telefonhörer (100) und Chipkarte (88), des mobilen Telefongeräts zugeordnet ist, wobei das besagte elektronische Etikett Mittel (22, 30) aufweist, in dem mindestens Informationen gespeichert sind, die mindestens eines der beiden besagten Elemente identifizieren, dem das besagte elektronische Etikett zugeordnet ist, wobei die besagten Informationen ganz oder teilweise denjenigen entsprechen, die in mindestens einem der beiden besagten Elemente gespeichert sind, dem das besagte elektronische Etikett (10) zugeordnet ist.

2. System nach Anspruch 1, **dadurch gekennzeichnet, dass** das besagte elektronische Etikett Mittel (22, 30) aufweist, um Informationen bezüglich der einzelnen Verteilungsschritte des Elements zu Speichern und zu Lesen, dem es zugeordnet ist.

3. System nach Anspruch 2, **dadurch gekennzeichnet, dass** die Informationen des besagten elektronischen Etiketts bezüglich der einzelnen Verteilungsschritte ferner die Rufnummer des unter dem Akronym "MS_ISDN" bekannten Teilnehmers umfassen, das für den angelsächsischen Ausdruck "Mobile Station - Integrated Services Digital Number" steht.

4. System nach einem der Ansprüche 1 bis 3, **dadurch gekennzeichnet, dass** das besagte elektronische Etikett, wenn es der Chipkarte (88) zugeordnet ist, die Chipkarte (88) identifizierende Informationen enthält, wobei die besagten Informationen mindestens die Seriennummer des Herstellers der besagten Chipkarte umfassen.

5. System nach einem der Ansprüche 1 bis 4, **dadurch gekennzeichnet, dass** das besagte elektronische Etikett, wenn es der Chipkarte (88) zugeordnet ist, die Chipkarte (88) identifizierende Informationen enthält, wobei die besagten Informationen mindestens die Seriennummer der Chipkarte umfassen.

6. System nach einem der Ansprüche 1 bis 5, **dadurch gekennzeichnet, dass** das besagte elektronische Etikett, wenn es der Chipkarte (88) zugeordnet ist, eine internationale Teilnehmernummer umfasst, bekannt unter dem Akronym "IMSI", das für den angelsächsischen Ausdruck "International Mobile Subscriber Identity" steht.

7. System nach Anspruch 6, **dadurch gekennzeichnet, dass** das besagte elektronische Etikett, wenn es der Chipkarte (88) zugeordnet ist, eine eine Datenbank identifizierende Nummer "HLR" umfasst, in der die Nummer "IMSI" des Teilnehmers gespeichert ist, wobei "HLR" dem Akronym des angelsächsischen Ausdrucks "Home Location Register" entspricht.

8. System nach einem der Ansprüche 1 bis 7, **dadurch gekennzeichnet, dass** das besagte elektronische Etikett, wenn es der Chipkarte (88) zugeordnet ist, die Chipkarte identifizierende Informationen umfasst, wobei diese Informationen ganz oder teilweise denjenigen entsprechen, die in einer Datei eines Speichers der besagten Chipkarte (88) enthalten sind.

9. System nach Anspruch 8, **dadurch gekennzeichnet, dass** es sich bei der besagten Datei eines Speichers der besagten Chipkarte (88) um die Datei handelt, die unter dem Akronym "EF-ICC" bekannt ist, das für den angelsächsischen Ausdruck "Entry File - Integrated Circuit Chip" steht.

10. System nach einem der Ansprüche 1 bis 3, **dadurch gekennzeichnet, dass** das besagte elektronische Etikett, wenn es dem Telefonhörer (100) zugeordnet ist, den besagten Telefonhörer (100) identifizierende Informationen aufweist, wobei diese Informationen mindestens die den besagten Hörer identifizierende Seriennummer umfassen.

11. System nach einem der Ansprüche 1 bis 3, **dadurch gekennzeichnet, dass** das besagte elektronische Etikett, wenn es dem Telefonhörer (100) zugeordnet ist, den besagten Telefonhörer (100) identifizierende Informationen aufweist, wobei diese Informationen mindestens denjenigen entsprechen, die in einer Datei eines Speichers des besagten Telefonhörers enthalten sind.

12. System nach Anspruch 2, **dadurch gekennzeichnet, dass** die Informationen des besagten elektronischen Etiketts bezüglich der einzelnen Verteilungsschritte mindestens Codes umfassen, die die einzelnen Beteiligten an jedem Verteilungsschritt identifizieren.

13. System nach Anspruch 11, **dadurch gekennzeichnet, dass** die Informationen des besagten elektronischen Etiketts bezüglich der einzelnen Verteilungsschritte ferner Codes umfassen, die die Transferschritte zwischen den einzelnen Beteiligten identifizieren.

14. System nach einem der Ansprüche 12 oder 13, **dadurch gekennzeichnet, dass** die Informationen des besagten elektronischen Etiketts bezüglich der einzelnen Verteilungsschritte der Chipkarte ferner die Seriennummer des Telefonhörers (100) umfassen, mit dem die Chipkarte verbunden ist.

15. System nach einem der Ansprüche 12 oder 13, **dadurch gekennzeichnet, dass** die Informationen des besagten elektronischen Etiketts bezüglich der einzelnen Verteilungsschritte des Telefonhörers ferner die Informationen umfassen, die die Chipkarte (88) identifizieren, mit der der Telefonhörer (100) verbunden ist.
